# EUROPÄISCHE PATENTANMELDUNG

(11) **EP 3 599 713 A1**
(43) Veröffentlichungstag der Anmeldung: **29.01.2020**
(21) Anmeldenummer: 18185499.3
(22) Anmeldetag: 25.07.2018
(51) Int. Cl.: H02M 7/5387, H02P 6/04, H02M 1/00, H02M 7/48

(54) **FREQUENZUMRICHTER MIT TEMPORÄR FREIGESCHALTETEN RESSOURCEN**

(71) Anmelder: Siemens Aktiengesellschaft, 80333 München (DE)
(72) Erfinder: Krause-Leipoldt, Tammo, 91083 Baiersdorf (DE)

(57) **Zusammenfassung**

Eine Steuerelektronik (9) eines Frequenzumrichters (4) nimmt wiederholt jeweils einen Basissollwert (B*) für den Betrieb einer über den Frequenzumrichter (4) mit elektrischer Energie versorgten elektrischen Maschine (5) entgegen, ermittelt unter Verwendung des jeweiligen Basissollwertes (B*) einen jeweiligen Stromsollwert (I*) und ermittelt unter Verwendung des jeweiligen Stromsollwertes (I*) jeweilige Steuersignale (C1 bis C6) für Leistungshalbleiter (6) des Frequenzumrichters (4). Sie steuert die Leistungshalbleiter (6) entsprechend der ermittelten jeweiligen Steuersignale (C1 bis C6) an und versorgt dadurch die elektrische Maschine (5) derart mit elektrischer Energie, dass die elektrische Maschine (5) so weit wie möglich entsprechend dem Basissollwert (B*) betrieben wird. Die Steuerelektronik (9) ermittelt den jeweiligen Stromsollwert (I*) und/oder die jeweiligen Steuersignale (C1 bis C6) gemäß einem freigeschalteten Ermittlungsverfahren, wenn und solange ein zulässiger Nutzungsumfang (N) für das freigeschaltete Ermittlungsverfahren größer als 0 ist. Wenn hingegen der zulässige Nutzungsumfang (N) für das freigeschaltete Ermittlungsverfahren auf 0 absinkt, stellt die Steuerelektronik (9) die Ermittlung des jeweiligen Stromsollwertes (I*) und/oder der jeweiligen Steuersignale (C1 bis C6) gemäß dem freigeschalteten Ermittlungsverfahren ein. Zumindest von Zeit zu Zeit reduziert die Steuerelektronik (9) den zulässigen Nutzungsumfang (N) für das freigeschaltete Ermittlungsverfahren.

## Beschreibung

Die vorliegende Erfindung geht aus von einem Betriebsverfahren für einen Frequenzumrichter,
- wobei eine Steuerelektronik des Frequenzumrichters wiederholt jeweils einen Basissollwert für den Betrieb einer über den Frequenzumrichter mit elektrischer Energie versorgten elektrischen Maschine entgegennimmt, unter Verwendung des jeweiligen Basissollwertes einen jeweiligen Stromsollwert ermittelt, unter Verwendung des jeweiligen Stromsollwertes jeweilige Steuersignale für Leistungshalbleiter des Frequenzumrichters ermittelt und die Leistungshalbleiter entsprechend der ermittelten jeweiligen Steuersignale ansteuert und dadurch die elektrische Maschine derart mit elektrischer Energie versorgt, dass die elektrische Maschine so weit wie möglich entsprechend dem Basissollwert betrieben wird,
- wobei die Steuerelektronik den jeweiligen Stromsollwert und/oder die jeweiligen Steuersignale gemäß einem Ermittlungsverfahren ermittelt.

Die vorliegende Erfindung geht weiterhin aus von einem Steuerprogramm für eine Steuerelektronik eines Frequenzumrichters, wobei das Steuerprogramm Maschinencode umfasst, der von der Steuerelektronik abarbeitbar ist, wobei die Abarbeitung des Maschinencodes durch die Steuerelektronik bewirkt, dass die Steuerelektronik ein derartiges Betriebsverfahren ausführt.

Die vorliegende Erfindung geht weiterhin aus von einer Steuerelektronik eines Frequenzumrichters, wobei die Steuerelektronik mit einem derartigen Steuerprogramm programmiert ist, so dass die Abarbeitung des Maschinencodes durch die Steuerelektronik bewirkt, dass die Steuerelektronik ein derartiges Betriebsverfahren ausführt.

Die vorliegende Erfindung geht weiterhin aus von einem Frequenzumrichter, wobei der Frequenzumrichter Leistungshalbleiter aufweist, über welche eine elektrische Maschine mit elektrischer Energie versorgt wird, wobei der Frequenzumrichter eine derartige Steuerelektronik aufweist, welche die Leistungshalbleiter ansteuert.

Frequenzumrichters sind in vielen verschiedenen Ausgestaltungen bekannt. Je nach Frequenzumrichter sind verschiedene Funktionalitäten und Leistungsmerkmale realisierbar. Im Stand der Technik sind die Funktionalitäten und Leistungsmerkmale innerhalb des jeweiligen Frequenzumrichters - genauer: innerhalb von dessen Steuerelektronik - implementiert. Sie können vom Benutzer je nach Bedarf aufgerufen und genutzt werden oder nicht aufgerufen werden und damit ungenutzt bleiben. Eine nachträgliche Erweiterung bzw. allgemein nachträgliche Anpassung der Funktionalitäten und der Leistungsmerkmale je nach momentanem Bedarf des Benutzers ist hingegen nicht möglich.

Dies führt in der Praxis dazu, dass der Nutzer eines Frequenzumrichters bereits beim Erwerb des Frequenzumrichters sehr genau wissen muss, welche Funktionalitäten und Leistungsmerkmale er benötigt. Aus diesem Grund existieren oftmals viele verschiedene Frequenzumrichter, die sich in der Hardware gar nicht oder nur geringfügig unterscheiden, beim Hersteller des Frequenzumrichters aber eine enorme Varianz bewirken. Darüber hinaus erschweren sie dem Nutzer oftmals die Auswahl des für ihn geeigneten Frequenzumrichters. Insbesondere steht der Nutzer vor der Entscheidung, ob er beim Erwerb des Frequenzumrichters ein momentan überdimensioniertes Produkt erwirbt, damit ihm bei späteren Änderungen der Anforderungen an den Frequenzumrichter eine Ausbaureserve zur Verfügung steht, oder ob er nur ein Produkt erwirbt, das seinem momentanen Bedarf genügt, so dass er später bei einer Änderung der Anforderungen ein neues Produkt erwerben muss.

Die Aufgabe der vorliegenden Erfindung besteht darin, Möglichkeiten zu schaffen, mittels derer es möglich ist, jederzeit - auch nachträglich - den Funktionsumfang des Frequenzumrichters nach Bedarf anpassen zu können. In diesem Zusammenhang sollen insbesondere auch die berechtigten Interessen des Herstellers des Frequenzumrichters berücksichtigt werden.

Die Aufgabe wird durch ein Betriebsverfahren für eine über einen Frequenzumrichter gespeiste elektrische Maschine mit den Merkmalen des Anspruchs 1 gelöst. Vorteilhafte Ausgestaltungen des Betriebsverfahrens sind Gegenstand der abhängigen Ansprüche 2 bis 11.

Erfindungsgemäß wird ein Betriebsverfahren der eingangs genannten Art dadurch ausgestaltet, dass die Steuerelektronik den jeweiligen Stromsollwert und/oder die jeweiligen Steuersignale nur dann gemäß dem Ermittlungsverfahren ermittelt, wenn und solange ein zulässiger Nutzungsumfang für das Ermittlungsverfahren größer als 0 ist. Wenn der zulässige Nutzungsumfang für das Ermittlungsverfahren auf 0 absinkt, stellt die Steuerelektronik hingegen die Ermittlung des jeweiligen Stromsollwertes und/oder der jeweiligen Steuersignale gemäß dem Ermittlungsverfahren ein. Weiterhin reduziert die Steuerelektronik zumindest von Zeit zu Zeit den zulässigen Nutzungsumfang für das Ermittlungsverfahren. Der zulässige Nutzungsumfang definiert also, ob das Ermittlungsverfahren genutzt werden kann oder nicht. Aus diesem Grund wird das Ermittlungsverfahren als freigeschaltetes Ermittlungsverfahren bezeichnet.

Dadurch wird es dem Hersteller des Frequenzumrichters ermöglicht, den Frequenzumrichter und insbesondere dessen Steuerelektronik stets einheitlich herzustellen. Unabhängig von der konkreten Ausgestaltung des freigeschalteten Ermittlungsverfahrens stellt der Frequenzumrichter also von seiner Hardware her gesehen alle Voraussetzungen bereit, um das freigeschaltete Ermittlungsverfahren ausführen zu können. Der Notwendigkeit, die wirtschaftlichen Interessen auch des Herstellers zu berücksichtigen, wird dadurch Genüge getan, dass der Hersteller bestimmte Funktionalitäten und Leistungsmerkmale - und damit im Ergebnis das Ermittlungsverfahren, gemäß dem die Steuerelektronik den jeweiligen Stromsollwert und die jeweiligen Steuersignale ermittelt - nur in begrenztem Umfang (und gegen Gebühr) freischaltet, so dass insbesondere die Entwicklungsleistung und das Know-how, welches in den Funktionalitäten und Leistungsmerkmalen realisiert ist, honoriert werden. Dem Betreiber des Frequenzumrichters wird die Möglichkeit an die Hand gegeben, sich quasi ein individuelles Produkt speziell für seine Bedürfnisse maßzuschneidern und es darüber hinaus auch individuell an sich ändernde Anforderungen anzupassen.

Der zulässige Nutzungsumfang kann in prinzipiell beliebigen Einheiten festgelegt sein. Entscheidend ist ausschließlich, dass der Nutzungsumfang quantifiziert ist, so dass er nach und nach reduziert werden kann. Beispielsweise kann es sich bei dem zulässigen Nutzungsumfang um eine nutzungsunabhängige Zeitspanne handeln, beispielsweise um eine Anzahl von Tagen oder Wochen. Auch kann es sich um eine Anzahl von Betriebsstunden handeln, also eine nutzungsabhängige Zeitspanne. Ebenso kann es sich um eine Anzahl von Lastzyklen oder Taktzyklen handeln.

Es ist möglich, dass die Steuerelektronik immer dann, wenn der zulässige Nutzungsumfang einen unteren Grenzwert oberhalb von 0 erreicht, einen entsprechenden Hinweis ausgibt. Dadurch steht dem Betreiber des Frequenzumrichters die Möglichkeit zur Verfügung, rechtzeitig vor Erreichen eines zulässigen Nutzungsumfangs von 0 den zulässigen Nutzungsumfang aufzustocken. Somit wird das Interesse des Betreibers des Frequenzumrichters gewahrt, dass er den Frequenzumrichter jederzeit betreiben kann.

Unter Umständen ist es sogar möglich, die Steuerelektronik derart zu parametrieren, dass sie eine derartige Anforderung einer Aufstockung des zulässigen Nutzungsumfangs selbsttätig vornimmt. In diesem Fall ist das Betriebsverfahren derart ausgestaltet, dass die Steuerelektronik immer dann, wenn der zulässige Nutzungsumfang den unteren Grenzwert erreicht, prüft, ob sie zu einem eigenständigen Abrufen einer Erweiterung des zulässigen Nutzungsumfangs berechtigt ist. Bejahendenfalls ruft die Steuerelektronik die Erweiterung des zulässigen Nutzungsumfangs über eine Rechner-Rechner-Verbindung von einem Server ab. Verneinendenfalls gibt sie einen entsprechenden Hinweis aus.

Durch die genannten Vorgehensweisen ist - zumindest im Regelfall - gewährleistet, dass der zulässige Nutzungsumfang nicht auf 0 absinkt. Wenn dies doch der Fall ist, sind verschiedene Möglichkeiten gegeben.

Zum einen ist es möglich, dass die Steuerelektronik immer dann, wenn der zulässige Nutzungsumfang für das freigeschaltete Ermittlungsverfahren auf 0 absinkt, die Ermittlung des jeweiligen Stromsollwertes und der jeweiligen Steuersignale vollständig einstellt. Der Frequenzumrichter geht also sozusagen außer Betrieb. Zum anderen ist es möglich, dass die Steuerelektronik immer dann, wenn der zulässige Nutzungsumfang für das freigeschaltete Ermittlungsverfahren auf 0 absinkt, zwar weiterhin den jeweiligen Stromsollwert und die jeweiligen Steuersignale ermittelt, den jeweiligen Stromsollwert und/oder die jeweiligen Steuersignale jedoch gemäß einem von dem freigeschalteten Ermittlungsverfahren verschiedenen Basisverfahren ermittelt. Der Frequenzumrichter geht also sozusagen in eine Art Basisbetrieb über.

Das Basisverfahren unterscheidet sich von dem freigeschalteten Ermittlungsverfahren durch mindestens eine der folgenden Eigenschaften:
- Eine Taktzeit, mit welcher das Basisverfahren ausgeführt wird, ist größer als eine Taktzeit, mit welcher das freigeschaltete Ermittlungsverfahren ausgeführt wird. Beispielsweise kann das Basisverfahren mit einer Taktzeit von 500 µs arbeiten, während das freigeschaltete Ermittlungsverfahren mit einer Taktzeit von 125 µs arbeitet.
- Die Steuerelektronik nimmt im Rahmen des freigeschalteten Ermittlungsverfahrens zusätzlich zum jeweiligen Basissollwert auch jeweils einen Basisistwert entgegen und berücksichtigt ihn bei der Ermittlung des jeweiligen Stromsollwertes, nimmt den jeweiligen Basisistwert im Rahmen des Basisverfahrens jedoch nicht entgegen oder berücksichtigt ihn im Rahmen des Basisverfahrens nicht bei der Ermittlung des jeweiligen Stromsollwertes. Es erfolgt also im einen Fall eine Regelung, im anderen Fall nur eine Steuerung.
- Eine Sprungantwort, mit welcher die Steuerelektronik bei der Ermittlung der Stromsollwerte auf eine Änderung von Basissollwert zu Basissollwert reagiert, ist bei dem Basisverfahren anders als bei dem freigeschalteten Ermittlungsverfahren. Derartige Änderungen können beispielsweise im Falle einer Regelung durch die Art des Reglers (P-Regler, PI-Regler, PT1-Regler usw.) und dessen Parametrierung (beispielsweise bei einem PI-Regler Proportionalverstärkung und Nachstellzeit) bewirkt sein.
- Die Art des Basissollwertes ist im Rahmen des Basisverfahrens eine andere als im Rahmen des freigeschalteten Ermittlungsverfahrens. Beispielsweise kann im Rahmen des Basisverfahrens stets eine Lageregelung erfolgen, d.h. der Basissollwert ein Lagesollwert sein, während im Rahmen des freigeschalteten Ermittlungsverfahrens parametriert werden kann, ob der Basissollwert ein Lagesollwert, ein Drehzahlsollwert oder ein Momentsollwert ist.
- In vielen Fällen wird von dem Frequenzumrichter bei der Ermittlung der jeweiligen Steuersignale eine Lage einer beweglichen Komponente der elektrischen Maschine berücksichtigt, beispielsweise die Drehstellung des Rotors einer rotatorischen elektrischen Maschine. Es ist möglich, dass bei der Ermittlung der Steuersignale gemäß dem freigeschalteten Ermittlungsverfahren die Lage mittels eines Lagegebers erfasst und an die Steuerelektronik übermittelt wird, während sie beim Basisverfahren von der Steuerelektronik geberlos ermittelt wird.
- In vielen Fällen berücksichtigt die Steuerelektronik bei der Ermittlung des jeweiligen Stromsollwertes und/oder der Ermittlung der jeweiligen Steuersignale Sensorsignale aus der Umgebung des Frequenzumrichters und/oder aus der Umgebung der elektrischen Maschine. Dadurch kann die Steuerelektronik beispielsweise auf eine thermische Überlastung reagieren. Es ist möglich, dass die Steuerelektronik die Sensorsignale im Rahmen des Basisverfahrens auf andere Weise berücksichtigt als im Rahmen des freigeschalteten Ermittlungsverfahrens. Normalerweise (= Basisverfahren) wird die Steuerelektronik den Frequenzumrichter derart betreiben, dass die Hardwarekomponenten des Frequenzumrichters - insbesondere die Leistungshalbleiter - vor einer thermischen Überlastung geschützt werden. In manchen Anwendungsfällen - beispielsweise wenn die elektrische Maschine einen Lüfter betreibt, mittels dessen ein Tunnel für Kraftfahrzeuge oder Schienenfahrzeuge belüftet wird - muss aus übergeordneten Sicherheitsgründen jedoch der Frequenzumrichter "bis zum bitteren Ende" weiter betrieben werden können, obwohl er thermisch überlastet wird (= freigeschaltetes Ermittlungsverfahren). Denn es ist wichtiger, beispielsweise im Falle eines Brandes so lange wie möglich Rauch aus dem Tunnel abzuziehen und damit möglicherweise Menschenleben zu retten, als den Frequenzumrichter funktionsfähig zu erhalten.
- Die Steuerelektronik ermittelt den jeweiligen Stromsollwert und/oder die jeweiligen Steuersignale im Rahmen des Basisverfahrens und des freigeschalteten Ermittlungsverfahrens derart, dass eine der elektrischen Maschine zugeführte Leistung im Rahmen des Basisverfahrens auf einen niedrigeren Wert begrenzt wird als im Rahmen des freigeschalteten Ermittlungsverfahrens. Mit anderen Worten: Ohne Freischaltung des Ermittlungsverfahrens kann der Frequenzumrichter nur mit einer Leistung von x kW betrieben werden, während er mit Freischaltung des Ermittlungsverfahrens mit y kW betrieben werden kann, wobei y größer als x ist.

Es ist möglich, dass mittels eines jeweiligen Freischaltcodes nur einzelne Eigenschaften des Ermittlungsverfahrens freigeschaltet werden. Vorzugsweise sind jedoch Eigenschaften des Ermittlungsverfahrens zu vorkonfektionierten Gruppen zusammengefasst, die mittels eines einheitlichen Freischaltcodes freigeschaltet werden.

Der Freischaltcode kann der Steuereinrichtung auf prinzipiell beliebige Art und Weise übermittelt werden. Insbesondere ist es möglich, den Freischaltcode in einer App zu übermitteln. Auch ist es möglich, die vorkonfektionierten Gruppen mittels einer App zu definieren, so dass der Benutzer durch direktes Anwählen der App oder Auswählen innerhalb der App die jeweilige Gruppe festlegen kann.

Es ist möglich, dass für die Ausführung des freigeschalteten Ermittlungsverfahrens erforderliche Algorithmen und/oder Parameter in der Steuerelektronik permanent gespeichert sind. In diesem Fall erfolgt die Freischaltung des Ermittlungsverfahrens durch das Entgegennehmen eines Freischaltcodes durch die Steuerelektronik. Diese Ausgestaltung weist den Vorteil auf, dass nur in geringem Umfang Daten zur Steuerelektronik übertragen werden müssen. Es ist sogar möglich, dass die Daten manuell über ein Bedienfeld eingegeben werden. Alternativ ist es möglich, dass die Freischaltung des Ermittlungsverfahrens dadurch erfolgt, dass die Steuerelektronik die für die Ausführung des freigeschalteten Ermittlungsverfahrens erforderlichen Algorithmen und/oder Parameter zusammen mit einem Freischaltcode entgegennimmt. In diesem Fall ist zwar in größerem Umfang ein Datenverkehr erforderlich. Im Gegenzug weist diese Ausgestaltung jedoch den Vorteil auf, dass auf Seiten der Steuerelektronik ein geringerer Speicherbedarf besteht. Weiterhin liefern die Algorithmen und Parameter nur während des Zeitraums, während dessen sie in der Steuerelektronik gespeichert sind, einen Angriffspunkt für Hacker. Bei einer permanenten Speicherung in der Steuerelektronik ist dieser Angriffspunkt hingegen permanent gegeben.

Im Falle eines Ladens auch der Algorithmen und/oder Parameter ist es insbesondere möglich, dass diese beispielsweise über einen Cloudrechner geladen werden.

Die Aufgabe wird weiterhin durch ein Steuerprogramm mit den Merkmalen des Anspruchs 12 gelöst. Erfindungsgemäß bewirkt die Abarbeitung des Maschinencodes durch die Steuerelektronik, dass die Steuerelektronik ein erfindungsgemäßes Betriebsverfahren ausführt.

Die Aufgabe wird weiterhin durch eine Steuerelektronik eines Frequenzumrichters mit den Merkmalen von Anspruch 13 gelöst. Erfindungsgemäß ist die Steuerelektronik mit einem erfindungsgemäßen Steuerprogramm programmiert, so dass die Abarbeitung des Maschinencodes durch die Steuerelektronik bewirkt, dass die Steuerelektronik ein erfindungsgemäßes Betriebsverfahren ausführt.

Die Aufgabe wird weiterhin durch einen Frequenzumrichter mit den Merkmalen des Anspruchs 14 gelöst. Erfindungsgemäß ist die Steuerelektronik, welche die Halbleiterschalter ansteuert, als erfindungsgemäße Steuerelektronik ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Maschine,
- FIG 2: einen Antrieb und
- FIG 3 bis 7: Ablaufdiagramme.

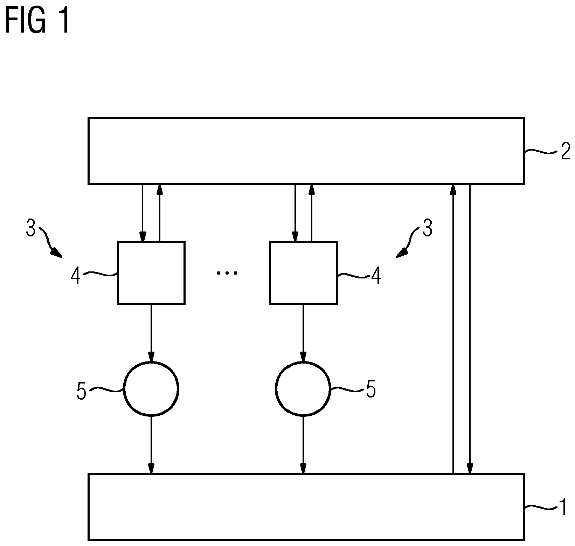

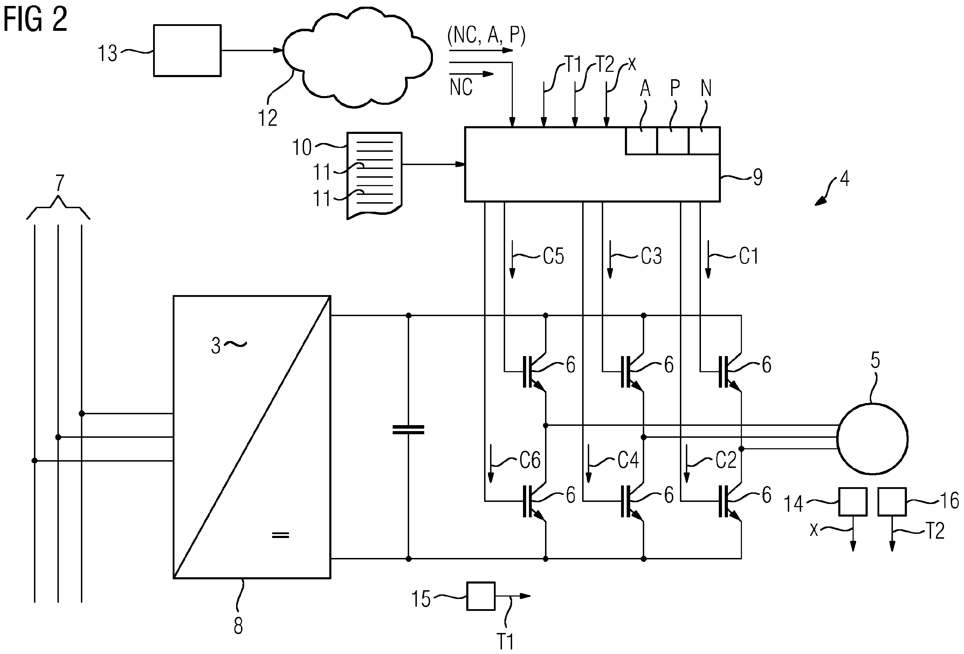

Gemäß FIG 1 wird eine industrielle technische Anlage 1 von einer Steuereinrichtung 2 gesteuert. Bei der Steuereinrichtung 2 kann es sich - je nach Anlage 1 und je nach zu realisierender Steuerungsaufgabe - beispielsweise um eine numerische Steuerung (CNC = computer numeric control), eine Bewegungssteuerung (MC = motion control) oder um eine speicherprogrammierbare Steuerung (= SPS, im englischen oftmals als PLC = programmable logic control bezeichnet) handeln. Von der Steuereinrichtung 2 werden in der Regel unter anderem mehrere Antriebe 3 gesteuert. Die Antriebe 3 umfassen jeweils einen Frequenzumrichter 4 und eine elektrische Maschine 5. Nachfolgend wird - stellvertretend für alle Frequenzumrichter 4 - zunächst in Verbindung mit FIG 2 der Aufbau eines der Frequenzumrichter 4 und sodann in Verbindung mit den weiteren FIG die Betriebsweise des Frequenzumrichters 4 näher erläutert.

Gemäß FIG 2 weist der Frequenzumrichter 4 Leistungshalbleiter 6 auf. Die Leistungshalbleiter 6 können beispielsweise entsprechend der Darstellung in FIG 2 als IGBTs ausgebildet sein. Auch eine Ausgestaltung als MOSFETs oder als Thyristoren - insbesondere als GTOs - ist möglich. In FIG 2 sind nur die Leistungshalbleiter 6 selbst dargestellt. In der Regel sind den Leistungshalbleitern 6 zusätzlich Freilaufdioden parallel gegen geschaltet. Die Freilaufdioden sind nicht mit dargestellt.

Über die Leistungshalbleiter 6 wird die entsprechende elektrische Maschine 5 mit elektrischer Energie versorgt. Insbesondere wird die elektrische Energie in der Regel aus einem Versorgungsnetz 7 bezogen, wobei die elektrische Energie vor dem Zuführen zu den Leistungshalbleitern 6 mittels eines Gleichrichters 8 gleichgerichtet wird. Der Gleichrichter 8 kann - je nach Lage des Einzelfalls - als rückspeisefähiger Umrichter oder als einfacher Diodengleichrichter ausgebildet sein.

Zur Steuerung der jeweiligen Leistungshalbleiter 6 und damit des jeweiligen Antriebs 3 weist der Frequenzumrichter 4 eine Steuerelektronik 9 auf. Die Steuerelektronik 9 steuert also die Leistungshalbleiter 6 an. Insbesondere führt die Steuerelektronik 9 den Leistungshalbleitern 6 entsprechende Steuersignale C1 bis C6 zu. Die Steuerelektronik 9 ist mit einem Steuerprogramm 10 programmiert. Das Steuerprogramm 10 umfasst Maschinencode 11, der von der Steuerelektronik 9 abarbeitbar ist. Die Abarbeitung des Maschinencodes 11 durch die Steuerelektronik 9 bewirkt, dass die Steuerelektronik 9 den Frequenzumrichter 4 gemäß einem Betriebsverfahren betreibt, das nachstehend in Verbindung mit den weiteren FIG näher erläutert wird.

Im Rahmen des erfindungsgemäßen Betriebsverfahrens setzt die Steuerelektronik 9 zunächst in einem Schritt S1 einen zulässigen Nutzungsumfang N auf einen Anfangswert N0. Der Anfangswert N0 ist größer als 0. Der zulässige Nutzungsumfang N kann beispielsweise als benutzungunabhängige Zeitdauer, als Anzahl von Betriebsstunden, als Anzahl von Lastzyklen und anderes mehr vorgegeben sein.

In einem Schritt S2 prüft die Steuerelektronik 9, ob der zulässige Nutzungsumfang N einen Wert größer als 0 aufweist. Wenn dies der Fall ist, geht die Steuerelektronik 9 zu einem Schritt S3 über. Im Schritt S3 nimmt die Steuerelektronik 9 einen Basissollwert B* entgegen. Der Basissollwert B* beschreibt einen Soll-Betriebszustand der elektrischen Maschine 5, beispielsweise bei einer üblichen rotatorischen elektrischen Maschine deren Lage, deren Drehzahl oder deren Moment. Bei einem Linearantrieb wären gegebenenfalls die Drehzahl und/oder das Moment durch die Geschwindigkeit und/oder die Kraft zu ersetzen.

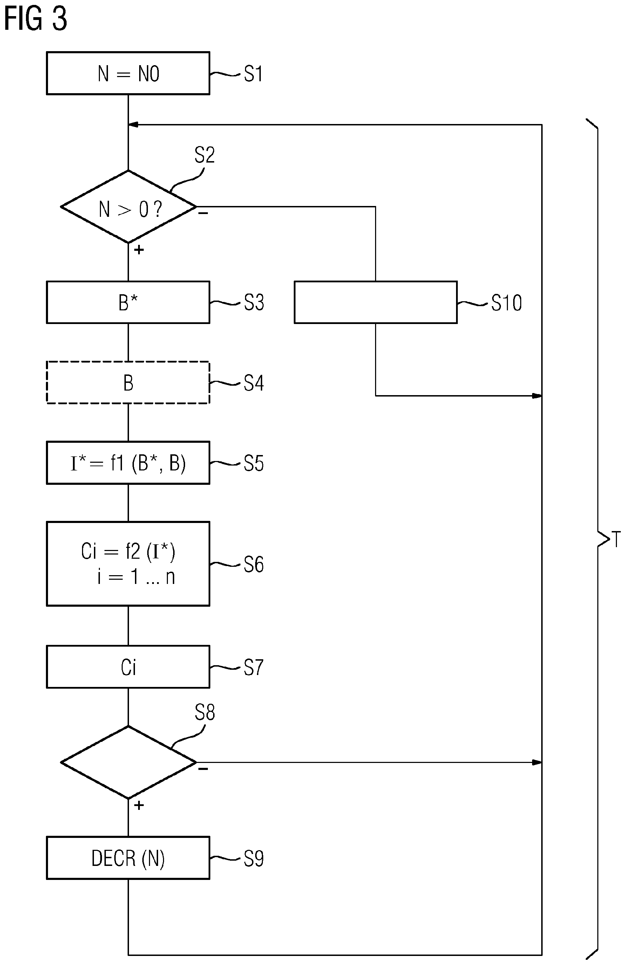

In einem Schritt S4 kann die Steuerelektronik 9 weiterhin einen zugehörigen Basisistwert B der elektrischen Maschine 5 entgegennehmen, der den zugehörigen Ist-Betriebszustand der elektrischen Maschine 5 charakterisiert. Der Schritt S4 ist jedoch nur optional und daher in FIG 3 nur gestrichelt eingezeichnet.

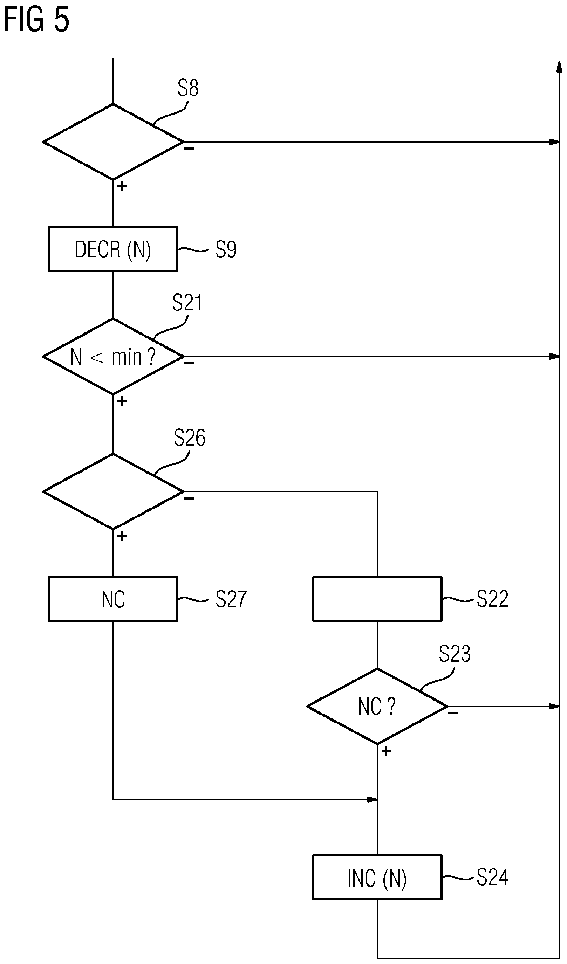

In einem Schritt S5 ermittelt die Steuerelektronik 9 einen Stromsollwert I* für die elektrische Maschine 5. Die Ermittlung erfolgt entsprechend der Darstellung in FIG 5 unter Verwendung des Basissollwertes B*. Falls auch der Basisistwert B zur Verfügung steht, wird in der Regel auch der Basisistwert B mit verwendet. Die Ermittlung des Schrittes S5 erfolgt gemäß einem ersten Teil f1 eines Ermittlungsverfahrens. Sodann ermittelt die Steuerelektronik 9 in einem Schritt S6 die Steuersignale C1 bis C6 für die Leistungshalbleiter 6. Die Ermittlung erfolgt entsprechend der Darstellung in FIG 3 unter Verwendung des Stromsollwertes I*. Die Ermittlung des Schrittes S6 erfolgt weiterhin gemäß einem zweiten Teil f2 des Ermittlungsverfahrens. Sowohl die Ermittlung des Stromsollwertes I* als auch die darauf aufbauende Ermittlung der Steuersignale C1 bis C6 erfolgen derart, dass die elektrische Maschine 5 so weit wie möglich entsprechend dem Basissollwert B* betrieben wird. In einem Schritt S7 steuert die Steuerelektronik 9 sodann die Leistungshalbleiter 6 entsprechend der ermittelten jeweiligen Steuersignale C1 bis C6 an. Dadurch wird die elektrische Maschine 5 entsprechend mit elektrischer Energie versorgt.

In einem Schritt S8 prüft die Steuerelektronik 9, ob eine Bedingung zum Verringern des zulässigen Nutzungsumfangs N erfüllt ist. Wenn dies der Fall ist, reduziert die Steuerelektronik 9 in einem Schritt S9 den zulässigen Nutzungsumfang N. Anderenfalls wird der Schritt S9 übersprungen. In beiden Fällen geht die Steuerelektronik 9 sodann zum Schritt S2 zurück.

Die Schritte S2 bis S9 werden von der Steuerelektronik 9 entsprechend der Darstellung in FIG 3 mit einer Taktzeit T wiederholt ausgeführt. Die Taktzeit T weist einen Wert auf, der im einstelligen Millisekundenbereich oder darunter liegt, beispielsweise bei 2 ms, 1 ms, 500 µs, 250 µs oder 125 µs.

Durch die oben stehend erläuterte Vorgehensweise wird also gewährleistet, dass die Steuerelektronik 9 den jeweiligen Stromsollwert I* und die jeweiligen Steuersignale C1 bis C6 gemäß dem durch die Teile f1 und f2 definierten Ermittlungsverfahren ermittelt, wenn und solange der zulässige Nutzungsumfang N größer als 0 ist. Wenn der zulässige Nutzungsumfang N auf 0 absinkt, wird das durch die Teile f1 und f2 definierte Ermittlungsverfahren hingegen nicht ausgeführt. In diesem Fall stellt also die Steuerelektronik 9 die Ermittlung des Stromsollwertes I* und der Steuersignale C1 bis C6 gemäß dem durch die Teile f1 und f2 definierten Ermittlungsverfahren ein. Stattdessen führt die Steuerelektronik 9 einen Schritt S10 aus, in dem sie eine andere Maßnahme ergreift. Die Ermittlung gemäß dem durch die Teile f1 und f2 definierten Ermittlungsverfahren ist also nur so lange freigeschaltet, wie der zulässige Nutzungsumfang N größer als 0 ist.

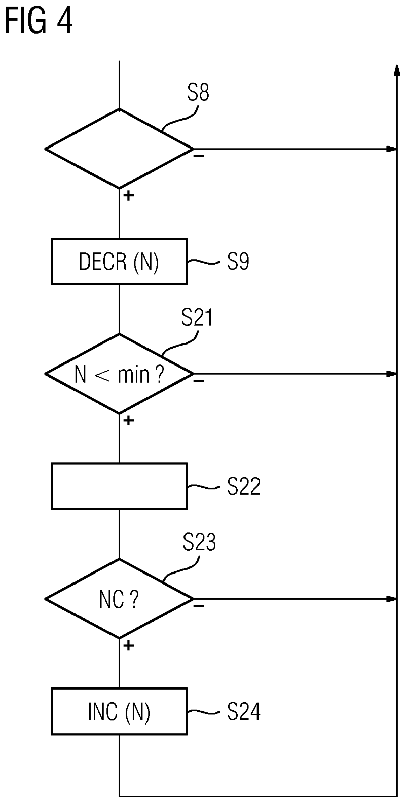

Um zu vermeiden, dass der zulässige Nutzungsumfang N bis auf 0 absinkt, sind verschiedene Ausgestaltungen möglich. Insbesondere ist es möglich, das Verfahren von FIG 3 alternativ entsprechend der Vorgehensweise von FIG 4 oder entsprechend der Vorgehensweise von FIG 5 zu ergänzen.

Im Rahmen der Vorgehensweise von FIG 4 schließt sich an den Schritt S9 ein Schritt S21 an. Im Schritt S21 prüft die Steuerelektronik 9, ob der zulässige Nutzungsumfang N einen unteren Grenzwert min erreicht. Der untere Grenzwert min weist einen Wert oberhalb von 0 auf. Solange der zulässige Nutzungsumfang N oberhalb des unteren Grenzwertes min bleibt, geht die Steuerelektronik 9 vom Schritt S21 wieder zum Schritt S2 zurück. Anderenfalls gibt die Steuerelektronik 9 in einem Schritt S22 einen Hinweis aus. Der Hinweis kann beispielsweise über eine Mensch-Maschine-Schnittstelle an einen Benutzer der Anlage 1, an eine übergeordnete Steuereinrichtung - beispielsweise die Steuereinrichtung 2 - oder allgemein an einen anderen Rechner übermittelt werden. Aufgrund des Hinweises ist es daher möglich, beispielsweise durch Vorgabe eines entsprechenden Freischaltcodes NC den zulässigen Nutzungsumfang N zu erhöhen. Die Steuerelektronik 9 prüft daher in einem Schritt S23, ob ihr ein derartiger Freischaltcode NC vorgegeben wird. Wenn dies der Fall ist, erhöht die Steuerelektronik 9 in einem Schritt S24 den zulässigen Nutzungsumfang N entsprechend.

Im Rahmen der Vorgehensweise von FIG 5 sind ebenfalls die Schritte S21 bis S24 vorhanden. Zusätzlich sind jedoch Schritte S26 und S27 vorhanden. Im Schritt S26 prüft die Steuerelektronik 9, ob sie zu einem eigenständigen Abrufen einer Erweiterung des zulässigen Nutzungsumfangs N berechtigt ist. Wenn dies der Fall ist, ruft die Steuerelektronik 9 im Schritt S27 - siehe auch FIG 2 - die Erweiterung des zulässigen Nutzungsumfangs N über eine Rechner-Rechner-Verbindung 12 von einem Server 13 ab. Insbesondere kann sie eigenständig den Freischaltcode NC anfordern. Anderenfalls, wenn die Steuerelektronik 9 also nicht zu einem eigenständigen Abrufen einer Erweiterung des zulässigen Nutzungsumfangs N berechtigt ist, geht die Steuerelektronik 9 zum Schritt S22 und von dort zu den Schritten S23 und S24 über.

Für die Ausgestaltung des Schrittes S10 gibt es ebenfalls verschiedene Möglichkeiten.

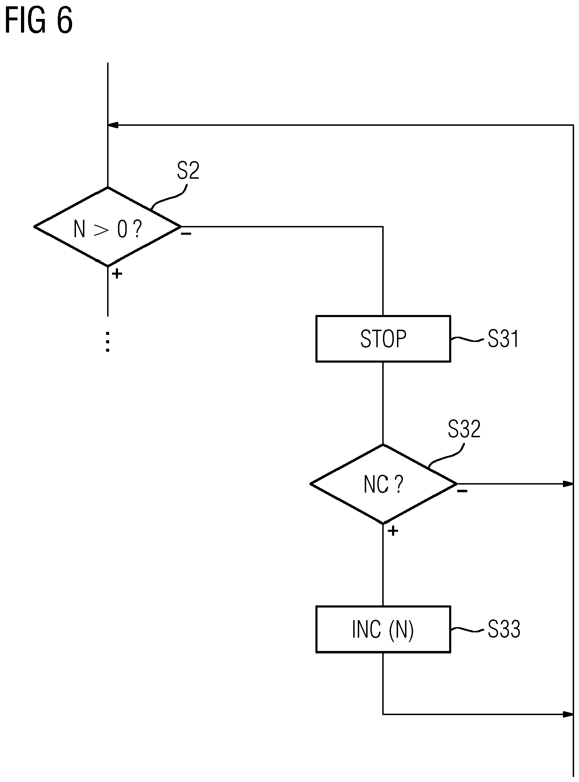

Beispielsweise ist es entsprechend der Darstellung in FIG 6 möglich, dass der Schritt S10 durch Schritte S31 bis S33 implementiert ist. Im Schritt S31 stellt die Steuerelektronik 9 die Ermittlung des jeweiligen Stromsollwertes I* und der jeweiligen Steuersignale C1 bis C6 vollständig ein. Sodann wartet sie im Schritt S32 ab, dass ihr der Freischaltcode NC vorgegeben wird. Wenn dies der Fall ist, erhöht die Steuerelektronik 9 in einem Schritt S33 den zulässigen Nutzungsumfang N entsprechend. Die Schritte S32 und S33 korrespondieren inhaltlich also mit den Schritten S23 und S24 der FIG 4 und 5.

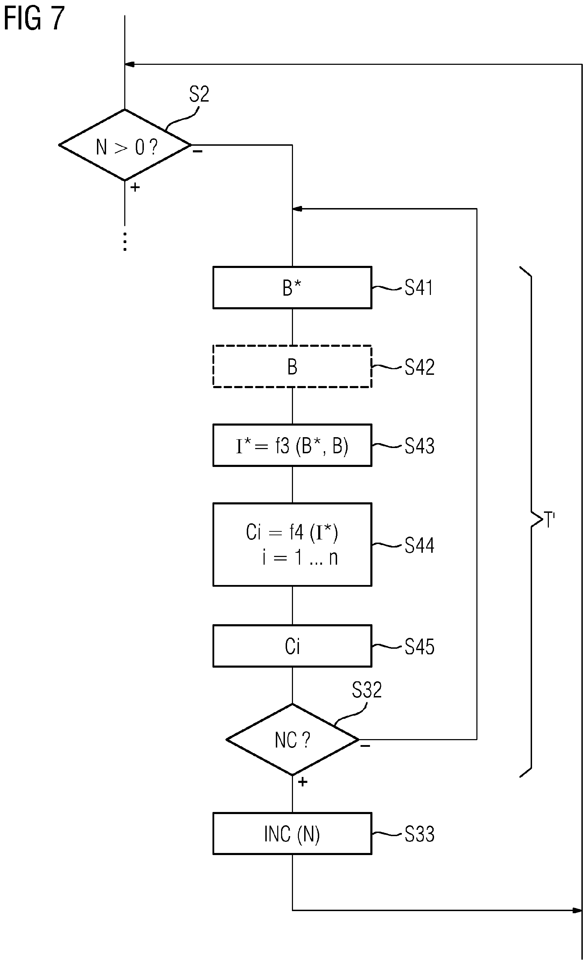

Alternativ ist es entsprechend der Darstellung in FIG 7 möglich, dass anstelle des Schrittes S31 Schritte S41 bis S45 vorhanden sind.

Im Schritt S41 nimmt die Steuerelektronik 9 den Basissollwert B* entgegen. Im Schritt S42 kann die Steuerelektronik 9 weiterhin einen zugehörigen Basisistwert B der elektrischen Maschine 5 entgegennehmen. Der Schritt S42 ist jedoch nur optional und daher in FIG 7 nur gestrichelt eingezeichnet. Im Schritt S43 ermittelt die Steuerelektronik 9 den Stromsollwert I* für die elektrische Maschine 5. Im Schritt S44 ermittelt die Steuerelektronik 9 die Steuersignale C1 bis C6 für die Leistungshalbleiter 6. Im Schritt S45 steuert die Steuerelektronik sodann die Leistungshalbleiter 6 entsprechend der ermittelten jeweiligen Steuersignale C1 bis C6 an.

Die Schritte S41 bis S45 korrespondieren also vom Ansatz her mit den Schritten S3 bis S7 von FIG 3. Der Schritt S43 unterscheidet sich vom Schritt S5 jedoch dadurch, dass im Rahmen des Schrittes S43 die Ermittlung des Stromsollwertes I* nicht gemäß dem ersten Teil f1 des Ermittlungsverfahrens erfolgt, sondern gemäß einem ersten Teil f3 eines Basisverfahrens. Alternativ oder zusätzlich unterscheidet sich der Schritt S44 vom Schritt S6 dadurch, dass im Rahmen des Schrittes S44 die Ermittlung der Steuersignale C1 bis C6 nicht gemäß dem zweiten Teil f2 des Ermittlungsverfahrens erfolgt, sondern gemäß einem zweiten Teil f4 des Basisverfahrens.

Das Basisverfahren der Schritte S43 und S44 ist ein anderes Verfahren als das Ermittlungsverfahren der Schritte S5 und S6. Es wird also zwar ein Stromsollwert I* ermittelt, und es werden auch die Steuersignale C1 bis C6 ermittelt. Der Stromsollwert I* des Schrittes S43 hat jedoch - bei gleichen Eingangsgrößen - einen anderen Wert als der Stromsollwert I* des Schrittes S5. Alternativ oder zusätzlich haben die Steuersignale C1 bis C6 des Schrittes S44 - bei gleichen Eingangsgrößen - andere Werte als die Steuersignale C1 bis C6 des Schrittes S6.

Das Basisverfahren der Schritte S43 und S44 kann sich von dem Ermittlungsverfahren S5 und S6 durch verschiedene Eigenschaften unterscheiden.

Beispielsweise ist es möglich, dass eine Taktzeit T', mit welcher das Basisverfahren ausgeführt wird, größer als die Taktzeit T ist, mit welcher das Ermittlungsverfahren ausgeführt wird. Beispielsweise kann die Taktzeit T' gleich dem Doppelten oder dem Vierfachen der Taktzeit T sein. Wenn - rein beispielhaft - die Taktzeit T 1 ms beträgt, könnte die Taktzeit T' also beispielsweise 2 ms oder 4 ms betragen.

Alternativ oder zusätzlich ist es möglich, dass die Steuerelektronik 9 im Rahmen des Ermittlungsverfahrens zusätzlich zum Basissollwert B* auch den Basisistwert B entgegennimmt und bei der Ermittlung des jeweiligen Stromsollwertes I* berücksichtigt, während die Steuerelektronik 9 im Rahmen des Basisverfahrens den Basisistwert B nicht entgegennimmt oder bei der Ermittlung des jeweiligen Stromsollwertes I* nicht berücksichtigt. Es kann also beispielsweise so sein, dass zwar der Schritt S4 vorhanden ist, nicht aber der Schritt S42.

Alternativ oder zusätzlich ist es möglich, dass eine Sprungantwort, mit welcher die Steuerelektronik 9 bei der Ermittlung der Stromsollwerte I* auf eine Änderung von Basissollwert B* zu Basissollwert B* reagiert, bei dem Basisverfahren anders ist als bei dem Ermittlungsverfahren. Beispielsweise kann im Rahmen des Schrittes S5 der erste Teil f1 des Ermittlungsverfahrens eine bestimmte Art von Regler (beispielsweise einen PI-Regler) realisieren, während im Rahmen des Schrittes S43 der erste Teil f3 des Basisverfahrens eine andere Art von Regler (beispielsweise einen P-Regler) realisiert. Auch können sich - sogar bei gleicher Art von Regler - die Reglercharakteristiken unterscheiden, beispielsweise bei einem PI-Regler die Proportionalverstärkungen und/oder die Nachstellzeiten im Rahmen des Ermittlungsverfahrens und des Basisverfahrens voneinander verschiedene Werte aufweisen. Auch ist es möglich, dass im Rahmen des Basisverfahrens die Art des Reglers und/oder dessen Reglerparameter fest vorgegeben sind, während sie im Rahmen des Ermittlungsverfahrens vom Benutzer einstellbar sind. Auch andere Variationen sind möglich.

Alternativ oder zusätzlich ist es möglich, dass die Art des Basissollwertes B* im Rahmen des Basisverfahrens eine andere ist als im Rahmen des Ermittlungsverfahrens. Beispielsweise ist es möglich, dass im Rahmen des Basisverfahrens der Basissollwert B* stets ein Lagesollwert ist, während im Rahmen des Ermittlungsverfahrens der Basissollwert B* stets ein Drehzahlsollwert ist oder vom Benutzer einstellbar ist, ob es sich um einen Lagesollwert, einen Drehzahlsollwert oder einen Momentsollwert handelt.

Zur Ermittlung der Steuersignale C1 bis C6 bei gegebenem Stromsollwert I* wird oftmals eine Lage x einer beweglichen Komponente der elektrischen Maschine 5 berücksichtigt, beispielsweise bei einer rotatorischen elektrischen Maschine eine Drehstellung des Rotors. Hierbei ist es prinzipiell möglich, die Drehstellung des Rotors bzw. allgemein die Lage x der beweglichen Komponente mittels eines entsprechenden Lagegebers 14 als Messwert zu erfassen und der Steuerelektronik 9 zur Verfügung zu stellen. Alternativ ist es möglich (und Fachleuten allgemein bekannt) die Drehstellung des Rotors bzw. allgemein die Lage x der beweglichen Komponente geberlos zu ermitteln. Es ist - alternativ oder zusätzlich zu den oben genannten Ausgestaltungen - möglich, dass bei der Ermittlung der Steuersignale C1 bis C6 gemäß dem Ermittlungsverfahren die Lage x mittels des Lagegebers 14 erfasst und an die Steuerelektronik 9 übermittelt wird, während sie beim Basisverfahren von der Steuerelektronik 9 geberlos ermittelt wird.

Alternativ oder zusätzlich ist es möglich, dass die Steuerelektronik 9 bei der Ermittlung des Stromsollwertes I* und/ oder der Ermittlung der Steuersignale C1 bis C6 Sensorsignale T1, T2 aus der Umgebung des Frequenzumrichters 4 und/oder aus der Umgebung der elektrischen Maschine 5 berücksichtigt. In diesem Fall ist es möglich, dass die Art und Weise der Berücksichtigung im Rahmen des Basisverfahrens eine andere ist als im Rahmen des Ermittlungsverfahrens. Beispielsweise können mittels entsprechender Sensoren 15, 16 eine Temperatur T1 in der Umgebung des Frequenzumrichters 4 und/oder eine Temperatur T2 in der Umgebung der elektrischen Maschine 5 erfasst und dem Frequenzumrichter 4 zugeführt werden. Im Rahmen des Ermittlungsverfahrens kann parametriert werden, ob die Steuerelektronik 9 bei Überschreiten von Grenzwerten durch die Temperaturen T1, T2 die Leistungshalbleiter 9 weiterhin ansteuert oder ob sie die Ansteuerung einstellt. Im Rahmen des Betriebsverfahrens kann fest voreingestellt sein, dass die Steuerelektronik 9 bei Überschreiten der Grenzwerte durch die Temperaturen T1, T2 die Ansteuerung der Leistungshalbleiter 9 einstellt.

Alternativ oder zusätzlich ist es möglich, dass im Rahmen des Basisverfahrens die Ermittlung des Stromsollwertes I* und/ oder der Steuersignale C1 bis C6 derart erfolgt, dass eine der elektrischen Maschine 5 zugeführte Leistung auf einen relativ niedrigen Wert von beispielsweise 3 kW begrenzt wird, während im Rahmen des Ermittlungsverfahrens die Ermittlung des Stromsollwertes I* und/oder der Steuersignale C1 bis C6 derart erfolgt, dass die der elektrischen Maschine 5 zugeführte Leistung auf einen höheren Wert von beispielsweise 10 kW begrenzt wird.

Zur Ausführung des Ermittlungsverfahrens müssen der Steuerelektronik 9 gewisse Algorithmen A und/oder Parameter P zur Verfügung stehen. Zum Zeitpunkt der Ausführung des Ermittlungsverfahrens müssen daher entsprechend der Darstellung in FIG 2 sowohl die Algorithmen A und/oder die Parameter P in der Steuerelektronik 9 gespeichert sein. Es ist möglich, dass die Algorithmen A und/oder Parameter P in der Steuerelektronik 9 permanent gespeichert sind. In diesem Fall erfolgt die Freischaltung des Ermittlungsverfahrens durch das Entgegennehmen des Freischaltcodes NC durch die Steuerelektronik 9. Dies ist in FIG 2 dadurch angedeutet, dass es möglich ist, ausschließlich den Freischaltcode NC an die Steuereinrichtung 9 zu übermitteln. Alternativ ist es möglich, dass die Algorithmen A und/oder Parameter P in der Steuerelektronik 9 nur temporär gespeichert sind. In diesem Fall erfolgt die Freischaltung des Ermittlungsverfahrens dadurch, dass nicht nur der Freischaltcode NC, sondern zusammen mit dem Freischaltcode NC auch die erforderlichen Algorithmen A und/oder Parameter P an die Steuerelektronik 9 übermittelt werden. Dies ist in FIG 2 dadurch angedeutet, dass der Freischaltcode NC, die Algorithmen A und/oder die Parameter P zusammen an die Steuerelektronik 9 übermittelt werden.

Zusammengefasst betrifft die vorliegende Erfindung somit folgenden Sachverhalt:
Eine Steuerelektronik 9 eines Frequenzumrichters 4 nimmt wiederholt jeweils einen Basissollwert B* für den Betrieb einer über den Frequenzumrichter 4 mit elektrischer Energie versorgten elektrischen Maschine 5 entgegen, ermittelt unter Verwendung des jeweiligen Basissollwertes B* einen jeweiligen Stromsollwert I* und ermittelt unter Verwendung des jeweiligen Stromsollwertes I* jeweilige Steuersignale C1 bis C6 für Leistungshalbleiter 6 des Frequenzumrichters 4. Sie steuert die Leistungshalbleiter 6 entsprechend der ermittelten jeweiligen Steuersignale C1 bis C6 an und versorgt dadurch die elektrische Maschine 5 derart mit elektrischer Energie, dass die elektrische Maschine 5 so weit wie möglich entsprechend dem Basissollwert B* betrieben wird. Die Steuerelektronik 9 ermittelt den jeweiligen Stromsollwert I* und/oder die jeweiligen Steuersignale C1 bis C6 gemäß einem freigeschalteten Ermittlungsverfahren, wenn und solange ein zulässiger Nutzungsumfang N für das freigeschaltete Ermittlungsverfahren größer als 0 ist. Wenn hingegen der zulässige Nutzungsumfang N für das freigeschaltete Ermittlungsverfahren auf 0 absinkt, stellt die Steuerelektronik 9 die Ermittlung des jeweiligen Stromsollwertes I* und/oder der jeweiligen Steuersignale C1 bis C6 gemäß dem freigeschalteten Ermittlungsverfahren ein. Zumindest von Zeit zu Zeit reduziert die Steuerelektronik 9 den zulässigen Nutzungsumfang N für das freigeschaltete Ermittlungsverfahren.

Die vorliegende Erfindung weist viele Vorteile auf. Für den Hersteller des Frequenzumrichters 4 verringert sich die Typenvielfalt und vereinfacht sich demzufolge insbesondere die Logistik. Für den Nutzer des Frequenzumrichters 4 ergibt sich ein Gewinn an Flexibilität. Dies ist insbesondere dann von Bedeutung, wenn sich die Anforderungen an den Frequenzumrichter 4 nachträglich ändern. Dadurch kann der Benutzer weiterhin beispielsweise zunächst eine erste Funktionalität anfordern und zu einem späteren Zeitpunkt - sei es zusätzlich zur ersten Funktionalität, sei es alternativ zur ersten Funktionalität - eine zweiten Funktionalität anfordern. Selbst verständlich ist dies auch bei mehr als zwei Funktionalitäten möglich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für einen Frequenzumrichter (4),
- wobei eine Steuerelektronik (9) des Frequenzumrichters (4) wiederholt jeweils einen Basissollwert (B*) für den Betrieb einer über den Frequenzumrichter (4) mit elektrischer Energie versorgten elektrischen Maschine (5) entgegennimmt, unter Verwendung des jeweiligen Basissollwertes (B*) einen jeweiligen Stromsollwert (I*) ermittelt, unter Verwendung des jeweiligen Stromsollwertes (I*) jeweilige Steuersignale (C1 bis C6) für Leistungshalbleiter (6) des Frequenzumrichters (4) ermittelt und die Leistungshalbleiter (6) entsprechend der ermittelten jeweiligen Steuersignale (C1 bis C6) ansteuert und dadurch die elektrische Maschine (5) derart mit elektrischer Energie versorgt, dass die elektrische Maschine (5) so weit wie möglich entsprechend dem Basissollwert (B*) betrieben wird,
- wobei die Steuerelektronik (9) den jeweiligen Stromsollwert (I*) und/oder die jeweiligen Steuersignale (C1 bis C6) gemäß einem freigeschalteten Ermittlungsverfahren ermittelt, wenn und solange ein zulässiger Nutzungsumfang (N) für das freigeschaltete Ermittlungsverfahren größer als 0 ist,
- wobei die Steuerelektronik (9) die Ermittlung des jeweiligen Stromsollwertes (I*) und/oder der jeweiligen Steuersignale (C1 bis C6) gemäß dem freigeschalteten Ermittlungsverfahren einstellt, wenn der zulässige Nutzungsumfang (N) für das freigeschaltete Ermittlungsverfahren auf 0 absinkt, und
- wobei die Steuerelektronik (9) zumindest von Zeit zu Zeit den zulässigen Nutzungsumfang (N) für das freigeschaltete Ermittlungsverfahren reduziert.

2. Betriebsverfahren nach Anspruch 1,
**dadurch gekennzeichnet,**
**dass** die Steuerelektronik (9) immer dann, wenn der zulässige Nutzungsumfang (N) einen unteren Grenzwert (min) oberhalb von 0 erreicht, einen entsprechenden Hinweis ausgibt.

3. Betriebsverfahren nach Anspruch 1,
**dadurch gekennzeichnet,**
**dass** die Steuerelektronik (9) immer dann, wenn der zulässige Nutzungsumfang (N) einen unteren Grenzwert (min) oberhalb von 0 erreicht, prüft, ob sie zu einem eigenständigen Abrufen einer Erweiterung des zulässigen Nutzungsumfangs (N) berechtigt ist, bejahendenfalls die Erweiterung des zulässigen Nutzungsumfangs (N) über eine Rechner-Rechner-Verbindung (12) von einem Server (13) abruft und verneinendenfalls einen entsprechenden Hinweis ausgibt.

4. Betriebsverfahren nach Anspruch 1, 2 oder 3,
**dadurch gekennzeichnet,**
**dass** die Steuerelektronik (9) immer dann, wenn der zulässige Nutzungsumfang (N) für das freigeschaltete Ermittlungsverfahren auf 0 absinkt, die Ermittlung des jeweiligen Stromsollwertes (I*) und der jeweiligen Steuersignale (C1 bis C6) vollständig einstellt.

5. Betriebsverfahren nach Anspruch 1, 2 oder 3,
**dadurch gekennzeichnet,**
**dass** die Steuerelektronik (9) immer dann, wenn der zulässige Nutzungsumfang (N) für das freigeschaltete Ermittlungsverfahren auf 0 absinkt, zwar weiterhin den jeweiligen Stromsollwert (I*) und die jeweiligen Steuersignale (C1 bis C6) ermittelt, den jeweiligen Stromsollwert (I*) und/oder die jeweiligen Steuersignale (C1 bis C6) jedoch gemäß einem von dem freigeschalteten Ermittlungsverfahren verschiedenen Basisverfahren ermittelt.

6. Betriebsverfahren nach Anspruch 5,
**d**adurch gekennzeichnet,
dass das Basisverfahren sich von dem freigeschalteten Ermittlungsverfahren durch mindestens eine der folgenden Eigenschaften unterscheidet:
- eine Taktzeit (T'), mit welcher das Basisverfahren ausgeführt wird, ist größer als eine Taktzeit (T), mit welcher das freigeschaltete Ermittlungsverfahren ausgeführt wird;
- die Steuerelektronik (9) nimmt im Rahmen des freigeschalteten Ermittlungsverfahrens zusätzlich zum jeweiligen Basissollwert (B*) auch jeweils einen Basisistwert (B) entgegen und berücksichtigt ihn bei der Ermittlung des jeweiligen Stromsollwertes (I*), nimmt den jeweiligen Basisistwert (B) im Rahmen des Basisverfahrens jedoch nicht entgegen oder berücksichtigt ihn im Rahmen des Basisverfahrens nicht bei der Ermittlung des jeweiligen Stromsollwertes (I*);
- eine Sprungantwort, mit welcher die Steuerelektronik (9) bei der Ermittlung der Stromsollwerte (I*) auf eine Änderung von Basissollwert (B*) zu Basissollwert (B*) reagiert, ist bei dem Basisverfahren anders als bei dem freigeschalteten Ermittlungsverfahren;
- die Art des Basissollwertes (B*) ist im Rahmen des Basisverfahrens eine andere als im Rahmen des freigeschalteten Ermittlungsverfahrens;
- bei der Ermittlung der jeweiligen Steuersignale (C1 bis C6) wird eine Lage (x) einer beweglichen Komponente der elektrischen Maschine (5) berücksichtigt und bei der Ermittlung der Steuersignale (C1 bis C6) gemäß dem freigeschalteten Ermittlungsverfahren wird die Lage (x) mittels eines Lagegebers (14) erfasst und an die Steuerelektronik (9) übermittelt, während sie beim Basisverfahren von der Steuerelektronik (9) geberlos ermittelt wird;
- die Steuerelektronik (9) berücksichtigt bei der Ermittlung des jeweiligen Stromsollwertes (I*) und/oder der Ermittlung der jeweiligen Steuersignale (C1 bis C6) Sensorsignale (T1, T2) aus der Umgebung des Frequenzumrichters (4) und/oder aus der Umgebung der elektrischen Maschine (5) und die Steuerelektronik (9) berücksichtigt die Sensorsignale (T1, T2) im Rahmen des Basisverfahrens auf andere Weise als im Rahmen des freigeschalteten Ermittlungsverfahrens;
- die Steuerelektronik (9) ermittelt den jeweiligen Stromsollwert (I*) und/oder die jeweiligen Steuersignale (C1 bis C6) im Rahmen des Basisverfahrens und des freigeschalteten Ermittlungsverfahrens derart, dass eine der elektrischen Maschine (5) zugeführte Leistung im Rahmen des Basisverfahrens auf einen niedrigeren Wert begrenzt wird als im Rahmen des freigeschalteten Ermittlungsverfahrens.

7. Betriebsverfahren nach einem der Ansprüche 1 bis 6,
**dadurch gekennzeichnet,**
**dass** für die Ausführung des freigeschalteten Ermittlungsverfahrens erforderliche Algorithmen (A) und/oder Parameter (P) in der Steuerelektronik (9) permanent gespeichert sind und dass die Freischaltung des Ermittlungsverfahrens durch das Entgegennehmen eines Freischaltcodes (NC) durch die Steuerelektronik (9) erfolgt oder dass die Freischaltung des Ermittlungsverfahrens dadurch erfolgt, dass die Steuerelektronik (9) die für die Ausführung des freigeschalteten Ermittlungsverfahrens erforderlichen Algorithmen (A) und/oder Parameter (P) zusammen mit einem Freischaltcode (NC) entgegennimmt.

8. Betriebsverfahren nach Anspruch 7,
**dadurch gekennzeichnet,**
**dass** Eigenschaften des Ermittlungsverfahrens zu vorkonfektionierten Gruppen zusammengefasst sind, die mittels eines einheitlichen Freischaltcodes freigeschaltet werden.

9. Betriebsverfahren nach Anspruch 8,
**dadurch gekennzeichnet,**
**dass** die vorkonfektionierten Gruppen mittels einer App definiert sind, so dass ein Benutzer durch direktes Anwählen der App oder Auswählen innerhalb App die jeweilige Gruppe festlegen kann.

10. Betriebsverfahren nach Anspruch 7, 8 oder 9,
**dadurch gekennzeichnet,**
**dass** der Freischaltcode der Steuereinrichtung in einer App übermittelt wird.

11. Betriebsverfahren nach einem der Ansprüche 7 bis 10,
**dadurch gekennzeichnet,**
**dass** im Falle eines Ladens auch der Algorithmen und/oder Parameter die Algorithmen und/oder Parameter über einen Cloudrechner geladen werden.

12. Steuerprogramm für eine Steuerelektronik (9) eines Frequenzumrichters (4), wobei das Steuerprogramm Maschinencode (11) umfasst, der von der Steuerelektronik (9) abarbeitbar ist, wobei die Abarbeitung des Maschinencodes (11) durch die Steuerelektronik (9) bewirkt, dass die Steuerelektronik (9) ein Betriebsverfahren nach einem der obigen Ansprüche ausführt.

13. Steuerelektronik eines Frequenzumrichters (4), wobei die Steuerelektronik mit einem Steuerprogramm (10) nach Anspruch 12 programmiert ist, so dass die Abarbeitung des Maschinencodes (11) durch die Steuerelektronik bewirkt, dass die Steuerelektronik ein Betriebsverfahren nach einem der Ansprüche 1 bis 11 ausführt.

14. Frequenzumrichter, wobei der Frequenzumrichter Leistungshalbleiter (6) aufweist, über welche eine elektrische Maschine (5) mit elektrischer Energie versorgt wird, wobei der Frequenzumrichter eine Steuerelektronik (9) nach Anspruch 13 aufweist, welche die Leistungshalbleiter (6) ansteuert.
